# EUROPEAN PATENT APPLICATION

(11) **EP 4 841 553 A1**
(43) Date of publication of application: **18.11.2026**
(21) Application number: 25754483.3
(22) Date of filing: 08.01.2025
(51) Int. Cl.: G06T 3/4076

(54) **DATA PROCESSING METHOD AND COMPUTING DEVICE**

(30) Priority: 17.02.2024 CN 202410180021
(71) Applicant: Huawei Technologies Co., Ltd., Shenzhen, Guangdong 518129 (CN)
(72) Inventor: LIN, Shaohui, Shanghai 200062 (CN); QIAO, Junbo, Shenzhen, Guangdong 518129 (CN); LI, Wei, Shenzhen, Guangdong 518129 (CN); XIE, Haizhen, Shenzhen, Guangdong 518129 (CN); TU, Zhijun, Shenzhen, Guangdong 518129 (CN); HU, Jie, Shenzhen, Guangdong 518129 (CN); CHEN, Hanting, Shenzhen, Guangdong 518129 (CN); WANG, Yunhe, Shenzhen, Guangdong 518129 (CN)
(74) Representative: Pfenning, Meinig & Partner mbB
(86) International application number: PCT/CN2025/071241
(87) International publication number: WO 2025/171756

(57) **Abstract**

A data processing method and a compute device are provided. The method includes: obtaining a first feature block whose window size is M from a feature map of a first channel of a target image, where the first feature block includes N feature subblocks whose window sizes are all P, and M is greater than P; obtaining, from the first feature block based on a first mask matrix whose window size is M, a second feature subblock whose window size is P; and determining, based on the second feature subblock, a super-resolution image corresponding to the target image, where resolution of the super-resolution image is greater than resolution of the target image. In this method, image super-resolution is performed based on the feature block whose window size is M, thereby enlarging a receptive field for data processing. In this way, a relationship between data at a longer distance can be mined from large window data, thereby improving image super-resolution performance.

## Description

### DATA PROCESSING METHOD AND COMPUTE DEVICE

This application claims priority to Chinese Patent Application No. 202410180021.X, filed with the China National Intellectual Property Administration on February 17, 2024 and entitled "DATA PROCESSING METHOD AND COMPUTE DEVICE", which is incorporated herein by reference in its entirety.

### TECHNICAL FIELD

This application relates to the field of artificial intelligence (artificial intelligence, AI) technologies, and in particular, to a data processing method and a compute device.

### BACKGROUND

In the field of AI, AI models are used to process a large amount of data. A large amount of data processed at a time occupies a large quantity of compute resources, and computational efficiency is low. Therefore, to avoid occupying a large quantity of compute resources and improve data processing efficiency, the AI model usually divides to-be-processed data into a plurality of windows, and separately processes data in each window. However, the AI model separately processes the data in each window, focuses only on partial data in the window, and cannot obtain information about long-distance data. Consequently, performance of the AI model may be reduced, leading to an inaccurate output result of the AI model.

### SUMMARY

This application provides a data processing method and a compute device, to improve performance of an AI model without occupying a large quantity of compute resources.

According to a first aspect, this application provides a data processing method. The method may be applied to a compute device. The method may include: obtaining a first feature block whose window size is M from a feature map of a first channel of a target image, where the first feature block includes N feature subblocks whose window sizes are all P, and M is greater than P; obtaining, from the first feature block based on a first mask matrix whose window size is M, a second feature subblock whose window size is P; and determining, based on the second feature subblock, a super-resolution image corresponding to the target image, where resolution of the super-resolution image is greater than resolution of the target image.

In the foregoing solution, after the feature map is divided into a plurality of feature subblocks based on the window size P, the feature subblocks are extended to the feature block whose window size is M, and image super-resolution is performed based on the feature block whose window size is M, thereby enlarging a receptive field for data processing. In this way, a relationship between data at a longer distance can be mined from large window data, thereby improving image super-resolution performance. In addition, the feature block is sampled based on the mask matrix whose window size is M, to obtain the second feature subblock whose window size is P, and the super-resolution image is determined based on the second feature subblock. This can avoid an increase in a data processing amount caused by window extension.

In a possible implementation of the first aspect, the obtaining, from the first feature block based on the first mask matrix whose window size is M, the second feature subblock whose window size is P may specifically include: multiplying the first mask matrix by data at a same location in the first feature block, to obtain new data, where the second feature subblock is a set of new data. The first mask matrix includes N submatrices respectively corresponding to the N feature subblocks, each submatrix includes one or more invalid values, and the second feature subblock includes feature values corresponding to valid values in the first mask matrix. The valid value may be set to 1, and the invalid value may be set to 0.

In the foregoing solution, the valid values in the first mask matrix are set in a decentralized manner, so that when the feature block is sampled for one time (that is, the foregoing data multiplication) based on the first mask matrix, data of any feature subblock is not completely obtained through sampling. In other words, the second feature subblock includes at least one piece of data of at least two feature subblocks in the N feature subblocks.

In a possible implementation of the first aspect, the N feature subblocks include a first feature subblock and N-1 reference feature subblocks corresponding to the first feature subblock, the first feature subblock is the same as a first target feature subblock, the first target feature subblock is obtained by calculating a union set of the second feature subblock and N-1 second target feature subblocks whose window sizes are P, the N-1 second target feature subblocks are obtained based on the first mask matrix and N-1 target feature blocks whose window sizes are M in the feature map of the first channel, and the N-1 target feature blocks each include the first feature subblock.

In the foregoing solution, for example, window extension is performed on the feature map by S times, M=S×P, N=S×S, and each feature subblock exists in N feature blocks. The N feature blocks including the first feature subblock are sampled based on the first mask matrix, and data obtained after a union set of the N feature subblocks obtained through sampling is calculated is the same as data of the first feature subblock, so that it can be ensured that no data is lost in a process of sampling the feature map by the first mask matrix.

In a possible implementation of the first aspect, the determining, based on the second feature subblock, the super-resolution image corresponding to the target image includes: processing the second feature subblock based on a self-attention mechanism to obtain a third feature subblock whose window size is P, and processing, based on the self-attention mechanism, a fourth feature subblock, whose window size is P, obtained from a feature map of a second channel of the target image, to obtain a fifth feature subblock whose window size is P; and generating the super-resolution image based on the third feature subblock and the fifth feature subblock.

In a possible implementation of the first aspect, the method further includes: obtaining, based on a second mask matrix whose window size is M, the fourth feature subblock from a second feature block whose window size is M in the feature map of the second channel. The second feature block includes the N feature subblocks whose window sizes are all P, and the N feature subblocks in the second feature block include the fourth feature subblock and N-1 reference feature subblocks corresponding to the fourth feature subblock. A location of a valid value in the second mask matrix is the same as a location of the fourth feature subblock in the second feature block.

In the foregoing solution, two mask matrices are used to sample feature maps of different channels, so that local information and global information of the feature subblocks can be effectively combined, thereby improving data processing performance.

In a possible implementation of the first aspect, the method is applied to a super-resolution model, and the method further includes: determining a latency of the super-resolution model; and updating the first mask matrix when the latency is less than or equal to a latency threshold.

In the foregoing solution, the first mask matrix is determined based on the model latency, so that it can be ensured that the model latency is not less than a preset threshold, thereby improving performance of the model.

In a possible implementation of the first aspect, the method further includes: performing feature extraction on an initial feature map of the first channel based on a first operator, to obtain a first feature of the first channel, where a frequency of the first feature is greater than a frequency threshold, and determining the feature map of the first channel based on the first feature of the first channel; and/or performing feature extraction on an initial feature map of the second channel based on the second operator, to obtain a first feature of the second channel, and determining the feature map of the second channel based on the first feature of the second channel.

In a possible implementation of the first aspect, the first operator includes a Sobel sobel operator or a Laplacian laplacian operator.

In the foregoing solution, a high-frequency feature is extracted from the feature map based on a high-frequency feature extraction operator, so that the first feature map can include more details, thereby improving data processing effect.

According to a second aspect, this application provides a data processing apparatus. The apparatus includes a processing module, a mask module, and a super-resolution module.

The processing module is configured to obtain a first feature block whose window size is M from a feature map of a first channel of a target image. The first feature block includes N feature subblocks whose window sizes are all P, and M is greater than P.

The super-resolution module is configured to obtain, from the first feature block based on a first mask matrix whose window size is M, a second feature subblock whose window size is P.

The super-resolution module is configured to determine, based on the second feature subblock, a super-resolution image corresponding to the target image. Resolution of the super-resolution image is greater than resolution of the target image.

In a possible implementation of the second aspect, the N feature subblocks include a first feature subblock, the first feature subblock is the same as a first target feature subblock, the first target feature subblock is obtained by calculating a union set of the second feature subblock and N-1 second target feature subblocks whose window sizes are P, the N-1 second target feature subblocks are obtained based on the first mask matrix and N-1 target feature blocks whose window sizes are M in the feature map of the first channel, and the N-1 target feature blocks each include the first feature subblock.

In a possible implementation of the second aspect, the super-resolution module is specifically configured to: process the second feature subblock based on a self-attention mechanism to obtain a third feature subblock whose window size is P, and process, based on the self-attention mechanism, a fourth feature subblock, whose window size is P, obtained from a feature map of a second channel of the target image, to obtain a fifth feature subblock whose window size is P; and generate the super-resolution image based on the third feature subblock and the fifth feature subblock.

In a possible implementation of the second aspect, the mask module is further configured to obtain, based on a second mask matrix whose window size is M, the fourth feature subblock from a second feature block whose window size is M in the feature map of the second channel. The second feature block includes the N feature subblocks whose window sizes are all P, and the N feature subblocks in the second feature block include the fourth feature subblock.

In a possible implementation of the second aspect, the processing module is further configured to: perform feature extraction on an initial feature map of the first channel based on a first operator, to obtain a first feature of the first channel, where a frequency of the first feature is greater than a frequency threshold, and determine the feature map of the first channel based on the first feature of the first channel; and/or perform feature extraction on an initial feature map of the second channel based on the second operator, to obtain a first feature of the second channel, and determine the feature map of the second channel based on the first feature of the second channel.

In a possible implementation of the second aspect, the first operator includes a Sobel sobel operator or a Laplacian laplacian operator.

In a possible implementation of the second aspect, the apparatus is applied to a super-resolution model, and the mask module is further configured to: determine a latency of the super-resolution model; and update the first mask matrix when the latency is less than or equal to a latency threshold.

According to a third aspect, this application further provides a compute device. The compute device includes a processor and a memory. The processor is configured to execute a computer program stored in the memory to implement the data processing method according to any one of the first aspect or the optional implementations of the first aspect.

According to a fourth aspect, this application further provides a computer-readable storage medium, including instructions. When the instructions are run on a computer, the computer is enabled to perform the data processing method according to any one of the first aspect or the optional implementations of the first aspect.

According to a fifth aspect, this application provides a computer program product including instructions. When the instructions are run on a computer, the computer is enabled to perform the data processing method according to any one of the first aspect or the possible implementations of the first aspect.

Any one of the foregoing apparatus, compute device, computer storage medium, or computer program product is configured to perform the method provided in the foregoing descriptions. Therefore, for beneficial effect that can be achieved by the apparatus, the compute device, the computer storage medium, or the computer program product, refer to beneficial effect of a corresponding solution in the corresponding method provided in the foregoing descriptions. Details are not described herein again.

### BRIEF DESCRIPTION OF DRAWINGS

FIG. 1 is a diagram of a structure of a super-resolution model according to an embodiment of this application;
FIG. 2 is a diagram of a structure of a processing module in the super-resolution model shown in FIG. 1 according to an embodiment of this application;
FIG. 3 is a diagram of a structure of a mask self-attention module in the super-resolution model shown in FIG. 1 according to an embodiment of this application;
FIG. 4 is a flowchart of a data processing method applied to the processing module shown in FIG. 2 according to an embodiment of this application;
FIG. 5 is a flowchart of a data processing method applied to the mask self-attention module shown in FIG. 3 according to an embodiment of this application;
FIG. 6 is a diagram of dividing, by the mask self-attention module shown in FIG. 3 based on a window, a feature map to obtain feature subblocks according to an embodiment of this application;
FIG. 7 is a diagram of padding feature subblocks by the mask self-attention module shown in FIG. 3 before extending a feature map based on a window according to an embodiment of this application;
FIG. 8 and FIG. 9 are diagrams of obtaining feature blocks by the mask self-attention module shown in FIG. 3 extending a feature map based on a window according to an embodiment of this application;
FIG. 10 is a diagram of sampling a feature block by the mask self-attention module shown in FIG. 3 based on a sparse mask matrix according to an embodiment of this application;
FIG. 11 is a diagram of a sparse mask matrix used by the mask self-attention module shown in FIG. 3 according to an embodiment of this application;
FIG. 12 is a diagram of a non-volatile principle that is met by a sparse mask matrix used by the mask self-attention module shown in FIG. 3 according to an embodiment of this application;
FIG. 13 is a diagram of sampling a feature block by the mask self-attention module shown in FIG. 3 based on a dense mask matrix according to an embodiment of this application;
FIG. 14 is a flowchart of another data processing method of the mask self-attention module shown in FIG. 3 according to an embodiment of this application;
FIG. 15a is a flowchart of a method for determining a sparse mask matrix according to an embodiment of this application;
FIG. 15b is a diagram of three sparse mask matrices and sampling loss rates thereof according to an embodiment of this application;
FIG. 16a is a flowchart of a method for training the super-resolution model shown in FIG. 1 according to an embodiment of this application;
FIG. 16b is an effect comparison diagram obtained by performing image super-resolution based on models by using the method shown in FIG. 16a according to an embodiment of this application;
FIG. 17 is a diagram of a structure of a data processing apparatus for implementing the method shown in FIG. 4 according to an embodiment of this application;
FIG. 18 is a diagram of a structure of a data processing apparatus for implementing the method shown in FIG. 5 according to an embodiment of this application;
FIG. 19 is a diagram of a structure of a data processing apparatus for implementing the method shown in FIG. 14 according to an embodiment of this application; and
FIG. 20 is a diagram of a structure of a compute device according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In the descriptions of embodiments of this application, the term "example", "for example", "in an example", or the like is used to give an example, an illustration, or a description. Any embodiment or design scheme described with "example", "for example", or "in an example" in embodiments of this application should not be construed as being more preferred or more advantageous than another embodiment or design solution. Exactly, use of terms such as "example", "in an example", or "for example" is intended to present a related concept in a specific manner.

In the descriptions of embodiments of this application, the term "and/or" describes only an association relationship between associated objects, and indicates that three relationships may exist. For example, A and/or B may indicate the following three cases: Only A exists, only B exists, and both A and B exist. In addition, unless otherwise specified, the term "a plurality of" means two or more. For example, a plurality of systems refer to two or more systems, and a plurality of screen terminals refer to two or more screen terminals.

In addition, the terms "first" and "second" are merely intended for description, and shall not be understood as an indication or implication of relative importance or an implicit indication of an indicated technical feature. Therefore, a feature limited by "first" or "second" may explicitly or implicitly include one or more features. The terms "include", "contain", "have", and their variants all mean "include but are not limited to", unless otherwise specifically emphasized in another manner.

Before embodiments of this application are described, the following first describes nouns appearing in embodiments of this application.

A feature map is a result obtained by performing feature representation on to-be-processed data. The to-be-processed data may include, for example, image data, audio data, or text data. For the image data and the audio data, data of a plurality of channels is included. Therefore, feature representation may be separately performed on the data of the plurality of channels, to obtain feature maps of the plurality of channels.

A feature block is a dataset in a feature map, and includes a plurality of feature values. In the field of AI, for ease of processing, a feature map may be divided into a plurality of feature blocks. Similarly, the feature block may be divided into feature subblocks, and the feature subblocks are a data subset in the feature block.

A window is a tool used to preprocess data. When there is a large amount of to-be-processed data, the to-be-processed data may be divided into a plurality of feature blocks based on the window, and each feature block is separately processed. In this way, occupation of a large quantity of compute resources can be avoided, and computational efficiency can be further improved. A length and a width of the window may be the same, or may be different. This application is described by using an example in which the length and the width are the same. For example, for a feature map C×H×W (C represents a channel, H represents a height, and W represents a width) of image data, window division may be performed on a feature map of each channel based on a window P to obtain a plurality of feature blocks. Each feature block may be represented as C×P×P, and a quantity of feature blocks corresponding to the feature map of each channel is HW/P².

A mask matrix is used to filter out a part of data in the to-be-processed data, or extract another part of data from the to-be-processed data. The mask matrix includes a valid value and an invalid value. A quantity of valid values and a quantity of invalid values and locations of the valid values and the invalid values in the mask matrix are usually set based on an actual application scenario. In the field of AI, an invalid value may be set to 0, and a valid value may be set to a non-zero value (for example, 1).

A high-frequency feature is feature data that changes sharply in a to-be-processed feature map. In the field of AI, a high-frequency feature may be extracted from a feature map based on a target operator. The target operator may include a Sobel sobel operator or a Laplacian laplacian operator. In addition, whether feature data is a high-frequency feature may be determined based on a value of a target parameter of the feature data. The target parameter of the feature data may include a gradient, an entropy, a frequency, a first-order derivative, a second-order derivative, or the like.

A transformer (transformer) structure is a deep learning network based on a self-attention mechanism. The transformer may perform self-attention processing on input data based on the self-attention mechanism, to mine a relationship between data in the input data.

Super resolution (super resolution, SA) computing is a data processing method in the field of AI. Specifically, data with low resolution (low resolution, LR) is reconstructed into data with high resolution (high resolution). Application scenarios of SA computing are wide. For example, SA computing may be performed on LR image data to obtain HR image data; or SA may be performed on LR audio data to obtain HR audio data.

In the field of AI, a deep learning-based super-resolution model is usually used to perform SA. The super-resolution model may be obtained by training an AI model based on LR data and HR data corresponding to the LR data. The AI model may use structures that include but are not limited to a convolutional neural network (convolutional neural network, CNN) structure, a transformer structure, or the like.

In a related technology 1, the convolutional neural network (convolutional neural network, CNN) structure may be used for a super-resolution model, input data is processed by using a CNN convolutional layer, and local features are extracted from the input data in parallel by using a plurality of convolution kernels at the convolutional layer. In this solution, the local features are extracted from the input data in parallel by using the convolution kernels at the convolutional layer. This can improve data processing efficiency. However, this solution is limited by a size of the convolution kernel, and a relationship between data in the input data cannot be mined, leading to low performance of the super-resolution model.

In a related technology 2, a super-resolution model may include a convolutional layer and a transformer transformer structure. A local feature in an input feature map is extracted by using a convolution kernel at the convolutional layer, the feature map is divided into feature subblocks whose window sizes are P by using a self-attention module in the transformer, and self-attention calculation is performed on each feature subblock, to mine a relationship between data of the feature subblocks. However, in this solution, the data relationship can only be mined from local data, and long-distance data information cannot be mined, which limits model performance improvement.

Therefore, embodiments of this application provide a data processing method, to resolve the foregoing problem.

In the data processing method provided in this embodiment of this application, on a premise that a feature map is divided into a plurality of feature subblocks based on a window size P, a feature subblock of each window of the feature map is extended by S times, a window size after extension is M (M=S×P), feature subblocks whose window sizes are P are sampled from feature blocks whose window sizes are M in the feature map based on a mask matrix whose window size is M, and self-attention calculation is performed on the sampled feature subblock whose window size is P. A feature subblock A whose window size is P is sampled from the feature block whose window size is M, which is different from a feature subblock B before window extension. The feature subblock A includes global information in the feature block whose window size is M. Therefore, in comparison with the foregoing related technology 2, in this embodiment of this application, self-attention calculation can be performed to mine a relationship between data at a longer distance by using two steps: window extension and mask sampling.

The data processing method provided in embodiments of this application may be applied to a super-resolution model, to improve performance of the super-resolution model.

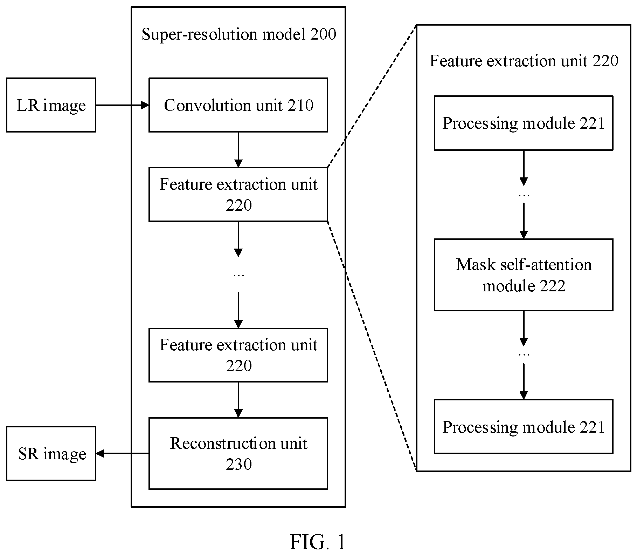

FIG. 1 is a diagram of a structure of a super-resolution model according to an embodiment of this application. As shown in FIG. 1, the super-resolution model may include one or more convolution units 210, one or more feature extraction units 220, and one or more reconstruction units 230. Image data is used as an example. The super-resolution model shown in FIG. 1 may perform super-resolution on LR image data to obtain an HR image.

The convolution unit 210 may be configured to perform convolution calculation on initial feature maps of a plurality of channels corresponding to the LR image data, to extract local features from the initial feature maps, and fuse the extracted local features into feature maps 3 of the plurality of channels. Specifically, the convolution unit 210 may include one or more convolutional layers. The convolutional layer may perform convolution calculation on input data of the convolutional layer by using a convolution kernel whose size is 3×3 and whose step is 1, to extract a feature from the input data. Certainly, the convolutional layer may include a plurality of convolution kernels, and each convolution kernel may use a same or different size and/or step.

The feature extraction unit 220 may include one or more processing modules 221 and one or more mask self-attention modules 222 shown in FIG. 1.

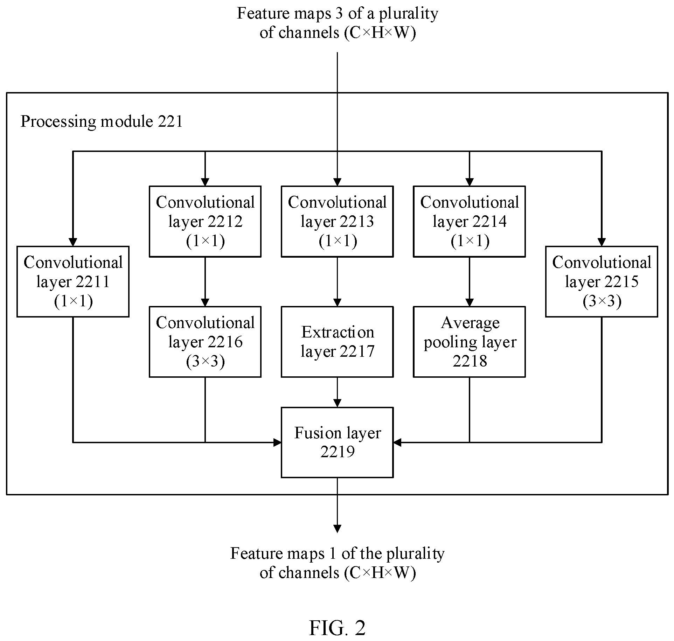

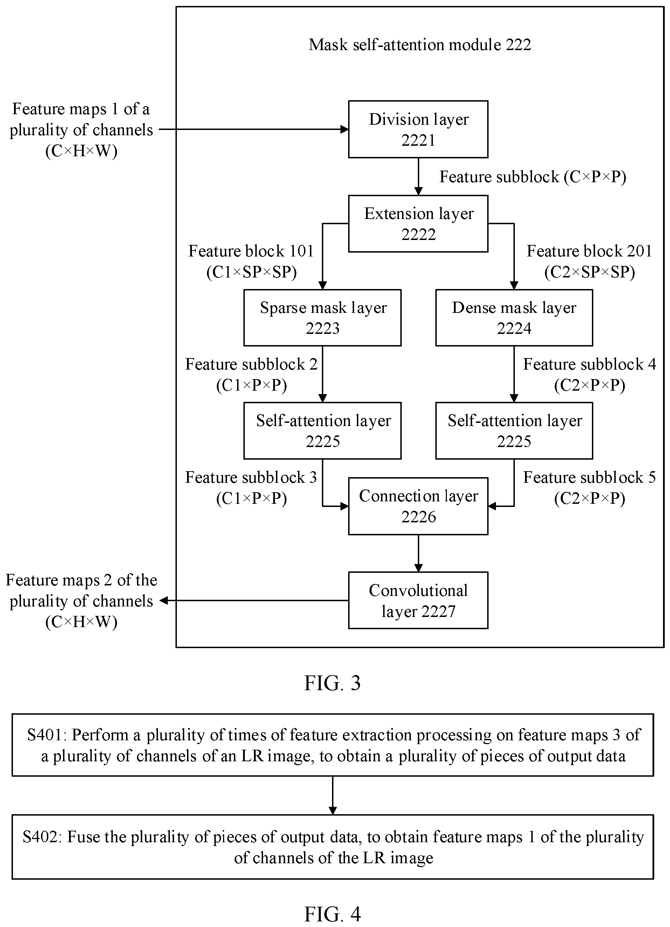

The processing module 221 is configured to perform high-frequency reparameterization calculation on the input data of the processing module 221, to extract a high-frequency feature from the input data. A capability of the model reconstructing details in the image data can be improved by extracting the high-frequency feature. Specifically, the processing module 221 may specifically include a plurality of processing branches and a fusion layer 2219. Each processing branch extracts, in different dimensions, features from the input data. As shown in FIG. 2, the processing module 221 may include five branches (which are sequentially marked as a branch 1 to a branch 5 from left to right). The fusion layer 2219 adds output data of the branch 1 to the branch 5. A specific processing process of the processing module 221 shown in FIG. 2 is specifically described below with reference to FIG. 4.

The mask self-attention module 222 is configured to perform self-attention calculation on feature data in each window of the input data of the mask self-attention module 222, to obtain feature maps 2 of the plurality of channels. Specifically, as shown in FIG. 3, the mask self-attention module 222 may include a division layer 2221, an extension layer 2222, a sparse mask layer 2223, a dense mask layer 2224, a plurality of self-attention layers 2225, a connection layer 2226, and a convolutional layer 2227.

The division layer 2221 is configured to: divide an input feature map based on a window, and divide the feature map into a plurality of feature subblocks whose window sizes are P.

The extension layer 2222 is configured to perform window extension by S times on the plurality of feature subblocks, to obtain a plurality of feature blocks whose window sizes are M. A quantity of feature blocks is the same as a quantity of the feature subblocks, where M=S×P.

The sparse mask layer 2223 is configured to: separately sample, based on a sparse mask matrix Ms whose window size is M, a part of feature blocks whose window sizes are M, and obtain a second feature subblock whose window size is P from the feature blocks. The sparse mask matrix Ms includes N submatrices respectively corresponding to N feature subblocks in the feature blocks, and each submatrix includes one or more invalid values and one or more valid values.

The dense mask layer 2224 is configured to separately sample, based on a dense mask matrix Md whose window size is M, another part of feature blocks whose window sizes are M, and obtain a fourth feature subblock whose window size is P from the feature blocks.

The self-attention layer 2225 is configured to: perform self-attention calculation on each second feature subblock to obtain a third feature subblock whose window size is P; or perform self-attention calculation on each fourth feature subblock to obtain a fifth feature subblock whose window size is P.

The connection layer 2226 is configured to connect output results of the plurality of self-attention layers 2225.

The convolutional layer 2227 is configured to: perform convolution calculation on an output result of the connection layer 2226 again, and extract local features from the output result for fusing, to obtain the feature maps 2 of the plurality of channels.

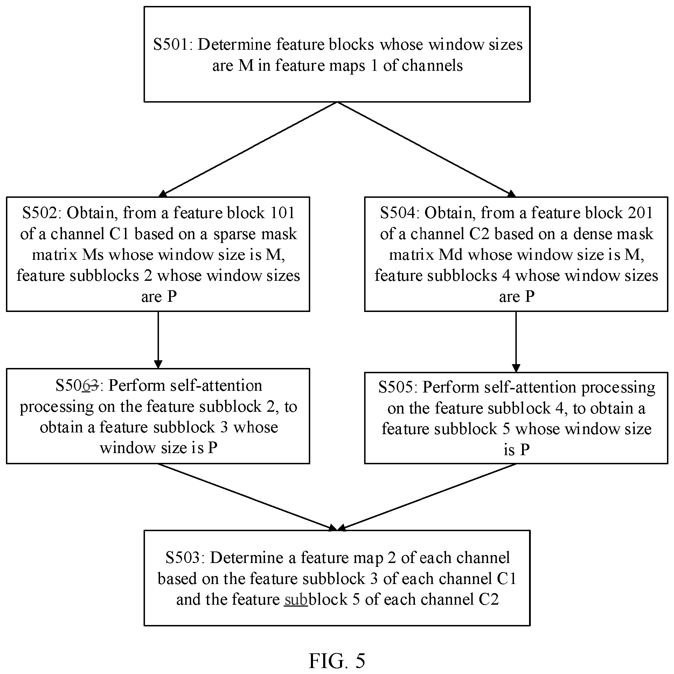

A specific processing process of the mask self-attention module 222 shown in FIG. 3 is specifically described below with reference to FIG. 5.

The reconstruction unit 230 is configured to perform calculation on input data of the reconstruction unit 230 to obtain super-resolution data. The reconstruction unit 230 may include one or more convolutional layers and one or more permutation layers. The permutation layer may include a shuffle operation, used to randomly permutate elements in an input feature map, to improve a generalization capability of the model. Low-resolution image data may be converted into high-resolution image data by using a convolution operation and the shuffle operation. When super-resolution is performed on the image data, quantities of convolutional layers and permutation layers may be determined based on a super-resolution multiple. For example, when the super-resolution multiple is 2, the quantities of convolutional layers and permutation layers may be 1; when the super-resolution multiple is 3, the quantities of convolutional layers and permutation layers may be 2; or when the super-resolution multiple is 4, the quantities of convolutional layers and permutation layers may be 3.

With reference to FIG. 4, the following describes a specific processing process of the processing module 221 shown in FIG. 2.

FIG. 4 is a flowchart of a data processing method according to an embodiment of this application. The method may be applied to a compute device, and the processing module 221 in the super-resolution model shown in FIG. 1 is deployed in the compute device. As shown in FIG. 4, the method may include S401 and S402.

S401: The processing module 221 performs a plurality of times of feature extraction processing on the feature maps 3 of the plurality of channels of the LR image, to obtain a plurality of pieces of output data. The feature maps 3 of the plurality of channels of the LR image may be output data of the convolution unit 201. Specifically, as shown in FIG. 2, the processing module 221 may include five branches (which are sequentially marked as the branch 1 to the branch 5 from left to right). In FIG. 2, the input data of the processing module 221 may include the feature maps 3 of the plurality of channels output by the convolution unit 210.

The branch 1 may include a convolutional layer 2211, and performs convolution processing on input data of the convolutional layer 2211. The convolutional layer 2211 may include one convolution kernel or a plurality of same or different convolution kernels. For example, a plurality of convolution kernels whose sizes are 1×1 and whose steps are 1 may be set for the convolutional layer 2211, and different data in the input data of the convolutional layer 2211 is separately convolved in parallel, thereby improving convolution processing efficiency. In FIG. 2, the input data of the convolutional layer 2211 is the input data of the processing module 221.

The branch 2 may include a convolutional layer 2212 and a convolutional layer 2216. The convolutional layer 2212 and the convolutional layer 2216 may include one convolution kernel or a plurality of same or different convolution kernels. For example, a plurality of convolution kernels whose sizes are 1×1 and whose steps are 1 may be set for the convolutional layer 2212, and convolution processing is performed on different data in input data of the convolutional layer 2212 in parallel. Similarly, the convolutional layer 2216 may include a plurality of convolution kernels whose sizes are 3×3 and whose steps are 1, and convolution processing is performed on different data in input data of the convolutional layer 2216 in parallel. In FIG. 2, the input data of the convolutional layer 2212 is the input data of the processing module 221, and the input data of the convolutional layer 2216 is output data of the convolutional layer 2212.

The branch 3 may include a convolutional layer 2213 and an extraction layer 2217. The convolutional layer 2213 may include one convolution kernel or a plurality of same or different convolution kernels. For example, the convolutional layer 2213 may include a plurality of convolution kernels whose sizes are 1×1 and whose steps are 1, and convolution processing is performed on different data in input data of the convolutional layer 2213 in parallel. The extraction layer 2217 may include a high-frequency feature extraction operator, used to extract a high-frequency feature from input data of the extraction layer 2217. In FIG. 2, the input data of the convolutional layer 2213 is the input data of the processing module 221, and the input data of the extraction layer 2217 is the output data of the convolutional layer 2213.

The branch 4 may include a convolutional layer 2214 and an average pooling (average pooling) layer 2218. The convolutional layer 2214 may include one convolution kernel or a plurality of same or different convolution kernels. For example, the convolutional layer 2214 may include a plurality of convolution kernels whose sizes are 1×1 and whose steps are 1, and convolution processing is performed on different data in input data of the convolutional layer 2214 in parallel. The average pooling layer 2218 may divide input data of the average pooling layer 2218 into several regions, and calculate an average value of all elements in each region. The average pooling layer 2218 can effectively reduce a dimension of data while retaining a local feature. In FIG. 2, the input data of the convolutional layer 2214 is the input data of the processing module 221, and the input data of the average pooling layer 2218 is the output data of the convolutional layer 2214.

The branch 5 may include a convolutional layer 2215. The convolutional layer 2215 may include one convolution kernel or a plurality of same or different convolution kernels. The convolutional layer 2215 may include a plurality of convolution kernels whose sizes are 3×3 and whose steps are 1, and convolution processing is performed on different data in input data of the convolutional layer 2215 in parallel. In FIG. 2, the input data of the convolutional layer 2215 is the input data of the processing module 221.

S402: The processing module 221 fuses the output data of the branches to obtain feature maps 1 of the plurality of channels of the LR image. Specifically, as shown in FIG. 2, the fusion layer 2219 adds the output data of the branch 1 to the branch 5, to obtain the feature maps 1 of the plurality of channels.

In the foregoing method, a plurality of convolution operations are used in the processing module 221, and fewer memory access calculations are required, so that data processing time can be shortened, and a data processing latency can be reduced. In addition, the high-frequency feature extraction operator is used to extract the high-frequency feature, so that more details can be retained in the feature map 1, thereby improving data processing performance.

With reference to FIG. 5, the following describes a specific processing process of the mask self-attention module 222 shown in FIG. 3.

FIG. 5 is a flowchart of a data processing method according to an embodiment of this application. The method may be applied to a compute device, and the mask self-attention module 222 in the super-resolution model shown in FIG. 1 is deployed in the compute device. The structure in the embodiment shown in FIG. 3 may be used for the mask self-attention module 222. As shown in FIG. 5, the method may include S501 to S506.

S501: The division layer 2221 divides the feature maps 1 of the plurality of channels of the input LR image into the plurality of feature subblocks whose window sizes are P, and the extension layer 2222 extends the plurality of feature subblocks by S times, to obtain the plurality of feature blocks whose window sizes are M.

Each feature block includes N feature subblocks whose window sizes are all P, where M=S×P, and N=S×S. A feature block 101 is used as an example. The N feature subblocks include a feature subblock 11 and N-1 reference feature subblocks of the feature subblock 11, which are specifically described in the following. The N-1 reference feature subblocks are feature subblocks adjacent to the feature subblock 11 in the feature map 1.

The feature maps 1 of the plurality of channels of the LR image may be obtained by processing, by the processing module 221, the feature maps 3 of the plurality of channels of the LR image. For details, refer to the foregoing description of FIG. 4. Details are not described herein again.

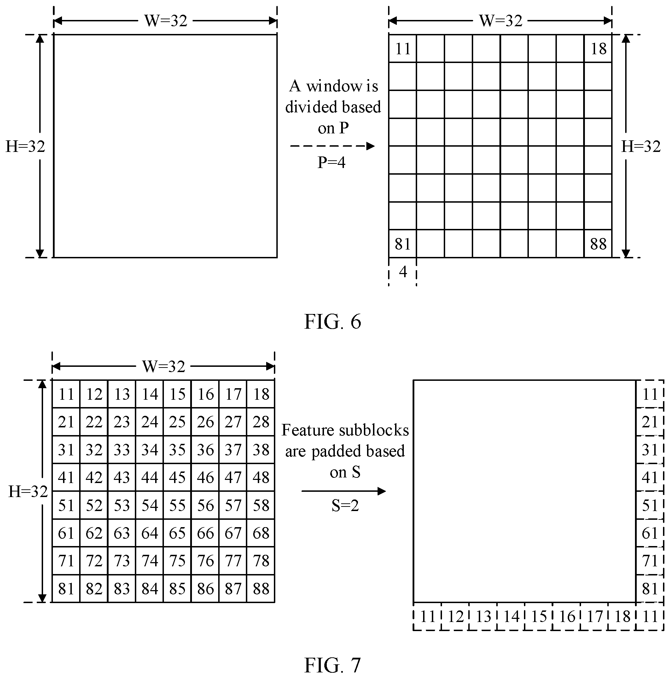

Specifically, the division layer 2221 performs window division on the feature maps 1 of the plurality of channels of the LR image based on the window size P, and divides the feature maps 1 of the channels of the LR image into the plurality of feature subblocks whose window sizes are P. A feature map 1 of one channel shown in FIG. 6 is used as an example. A height H and a width W of the feature map 1 are both 32. As shown in FIG. 6, when P is 4, H/P=8, and W/4=8, the feature map 1 may be divided into 64 feature subblocks whose window sizes are 4.

Specifically, the extension layer 2222 extends the plurality of feature subblocks whose window sizes are P by S times, to obtain the plurality of feature blocks whose window sizes are M.

Because a quantity of reference feature subblocks corresponding to feature subblocks on two sides at an extension direction end point in the feature map does not meet a requirement of S-times extension, that is, a quantity of reference feature subblocks corresponding to a feature subblock in a row Z and a column Z at the extension direction end point is less than N-1, when performing window extension, the extension layer 2222 needs to select, at an extension direction start point in the feature map 1 for padding to the extension direction end point, the feature subblock in the row Z and the column Z, and pad, to the extension direction end point, a feature subblock at the extension direction start point. The extension direction start point may include a feature subblock at the upper left corner, the upper right corner, the lower left corner, or the lower right corner in the feature map 1, where Z=S-1.

For example, the 64 feature subblocks in the feature map 1 shown in FIG. 6 are extended by a factor of 2. As shown in FIG. 7, the extension layer 2222 may select the feature subblock 11 as the extension direction start point for extension. An extension direction is toward a lower right corner, and a feature subblock in a row 1 and a column 1 and the feature subblock 11 are used to pad beyond a last row and a last column.

After padding the feature subblocks, the extension layer 2222 performs window extension on the feature map 1 by using a sliding window whose size is M. After the feature subblocks of the feature map 1 are extended by S times, the quantity of feature subblocks is the same as the quantity of feature blocks, and each feature subblock corresponds to one feature block. The 64 feature subblocks shown in FIG. 6 are used as an example. When S=2, M=8, and the extension layer 2222 may use the feature subblock as the start point, and perform extension two times to the lower right corner of the feature map 1, to obtain the 64 feature blocks.

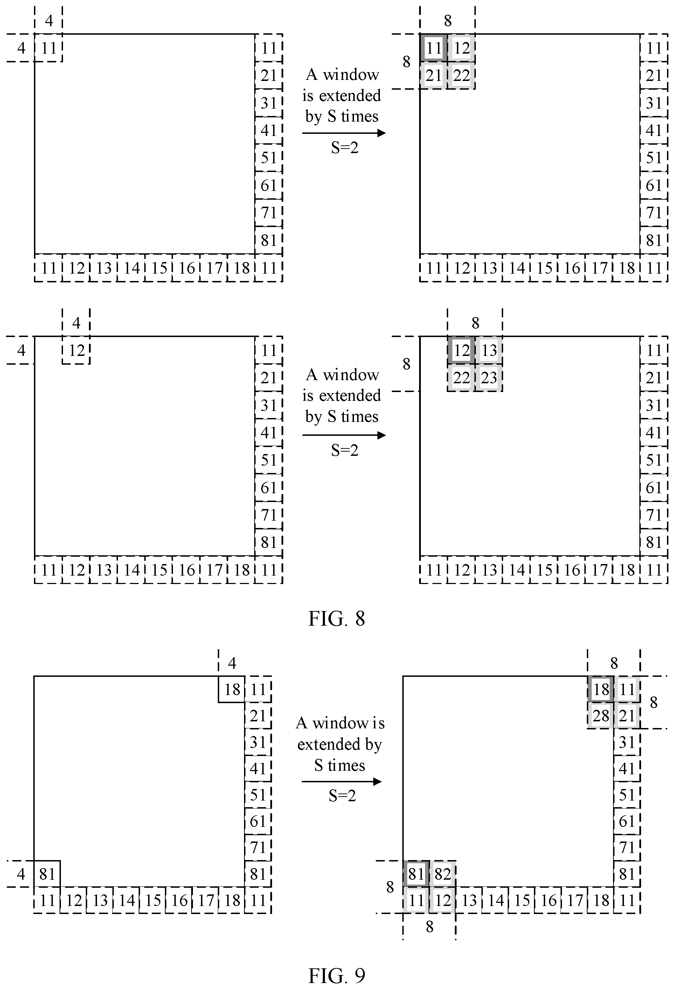

Each feature block includes the N feature subblocks, and the N feature subblocks include an extended feature subblock and N-1 reference feature subblocks of the feature subblock. The feature subblock 11 is used as an example. After window extension is performed on the feature subblock 11 by a factor of 2, a feature block corresponding to the feature subblock 11 is shown in FIG. 8. The feature block corresponding to the feature subblock 11 includes the feature subblock 11 and three reference feature subblocks of the feature subblock 11, and the three reference feature subblocks include a feature subblock 12, a feature subblock 21, and a feature subblock 22. The feature subblock 12 is used as an example. After window extension is performed on the feature subblock 12 by a factor of 2, a feature block corresponding to the feature subblock 12 is shown in FIG. 8. The feature block corresponding to the feature subblock 12 includes the feature subblock 12 and three reference feature subblocks of the feature subblock 12, and the three reference feature subblocks include a feature subblock 13, a feature subblock 22, and a feature subblock 23. A feature subblock 18 is used as an example. After window extension is performed on the feature subblock 18 by a factor of 2, a feature block corresponding to the feature subblock 18 is shown in FIG. 9. The feature block corresponding to the feature subblock 18 includes the feature subblock 18 and three reference feature subblocks of the feature subblock 18, and the three reference feature subblocks include a feature subblock 28, the feature subblock 11, and the feature subblock 21. A feature subblock 81 is used as an example. After window extension is performed on the feature subblock 81 by a factor of 2, a feature block corresponding to the feature subblock 81 is shown in FIG. 9. The feature block corresponding to the feature subblock 81 includes the feature subblock 81 and three reference feature subblocks of the feature subblock 81, and the three reference feature subblocks include a feature subblock 82, the feature subblock 11, and the feature subblock 12.

After a plurality of feature blocks corresponding to each channel are obtained, S502 is performed on feature maps 1 of a part of channels, to perform sparse sampling to obtain feature subblocks. For example, as shown in FIG. 3, the sparse mask layer 2223 obtains the feature block 101 from a feature map of a channel C1, and performs sparse sampling on the feature block 101. S504 is performed on feature maps 1 of another part of channels, to perform dense sampling to obtain feature subblocks. For example, as shown in FIG. 3, the dense mask layer 2224 obtains a feature block 201 from a feature map of a channel C2, and performs sparse sampling on the feature block 201. The plurality of channels of the LR image may be equally divided into two parts. To be specific, S502 is performed on feature maps 1 of C/2 channels (including the following channel C1), and S504 is performed on feature maps 1 of the other C/2 channels (including the following channel C2).

S502: The sparse mask layer 2223 samples, based on the sparse mask matrix Ms whose window size is M, each feature block in feature maps 1 of a part of channels, to obtain a plurality of feature subblocks 2 whose window sizes are P.

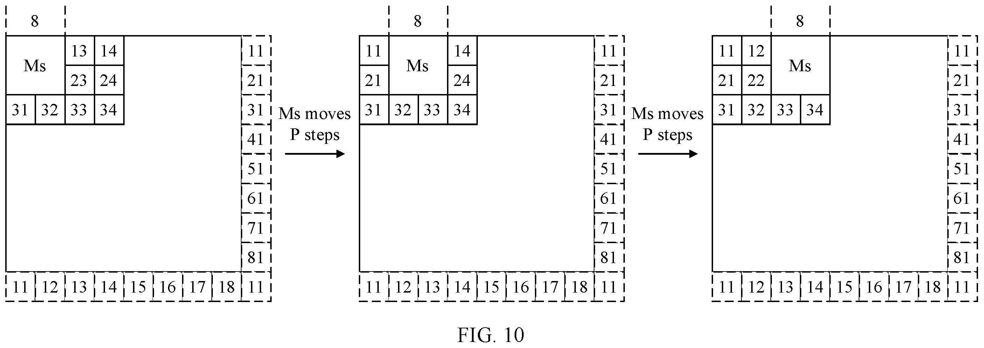

Specifically, the sparse mask layer 2223 may use the sparse mask matrix Ms to sample each feature block in the feature map 1 of the channel C1 based on a step P, and obtain, from each feature block, the feature subblock whose window size is P. As shown in FIG. 10, the sparse mask layer 2223 may sample the feature block 101 based on the sparse mask matrix Ms, to obtain the feature subblock 2 whose window size is P. Then, P steps are moved rightward to sample a feature block 102, the P steps are moved to sample a feature block 103, and the rest can be deduced by analogy, until all feature blocks in the feature map 1 of the channel C1 are sampled.

The reason why the window size of the feature subblock obtained through sampling by the sparse mask matrix Ms is P is that a quantity of valid values in the sparse mask matrix Ms is the same as a quantity of valid values in the feature subblock, both of which are P×P. The feature block 101 is used as an example. As shown in FIG. 8, the feature block 101 includes the feature subblock 11 and the reference feature subblocks thereof. The quantity of valid values in the sparse mask matrix Ms is the same as a quantity of valid values in the feature subblock 11 and the reference feature subblocks thereof. In the sparse mask matrix Ms, the valid value may be 1, and an invalid value is 0. When P=4 and S=2, the quantity of valid values in the sparse mask matrix Ms is 16, and a quantity of invalid values is 48.

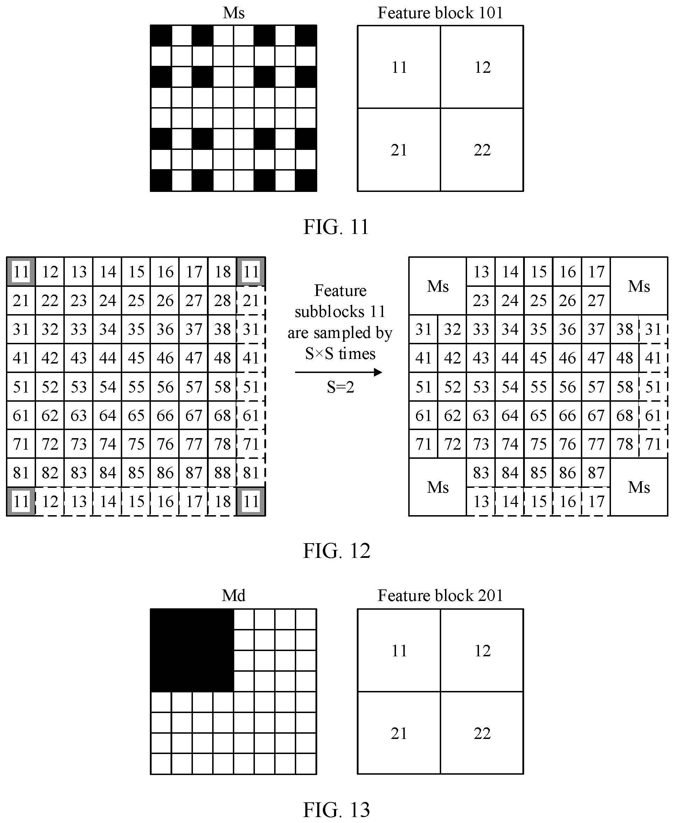

A feature subblock obtained by sampling a feature block by the sparse mask matrix Ms is different from a feature subblock in the feature block. The reason is that the valid values in the sparse mask matrix Ms are set in a decentralized manner, and therefore, the sparse mask matrix Ms does not sample all data of the feature subblock in the feature block. The sparse mask matrix Ms shown in FIG. 11 is used as an example. Black squares represent locations of the valid values 1, and the valid values 1 in the sparse mask matrix Ms are set in a distributed manner. Therefore, when the feature block 101 shown in FIG. 11 is sampled based the sparse mask matrix Ms, all data of the feature subblock 11, the feature subblock 12, the feature subblock 21, and the feature subblock 22 is not sampled.

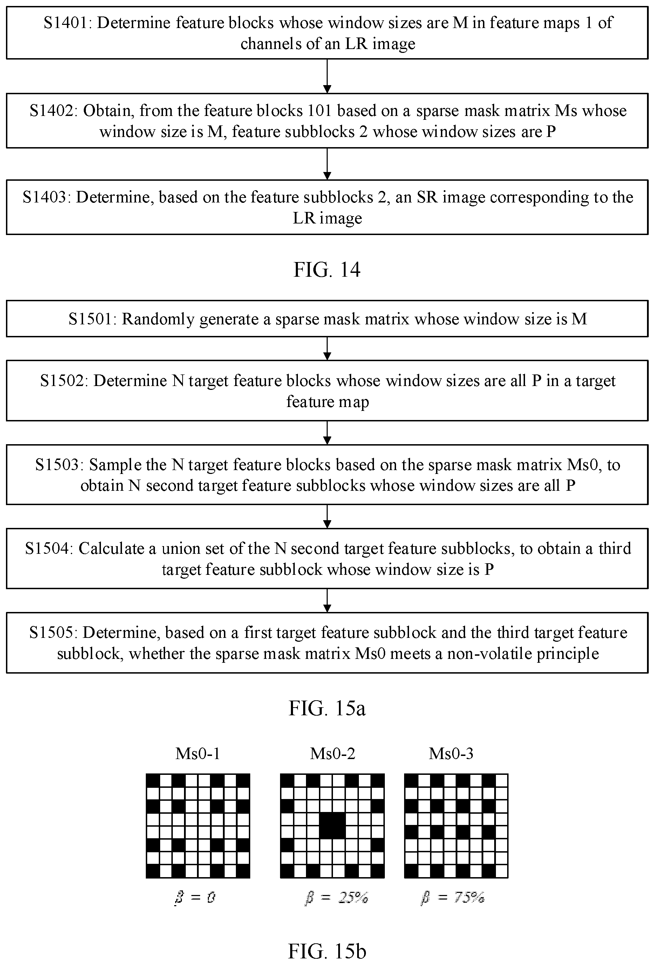

The sparse mask matrix Ms meets non-volatility. A process of determining the sparse mask matrix Ms is described below with reference to FIG. 15a. Details are not described herein. The non-volatility means that all data of a feature map is sampled by the sparse mask matrix Ms, and is not lost. The reason is that, after the feature subblocks in the feature blocks are padded, when all the feature blocks in the feature map are sampled based on the sparse mask matrix Ms, each feature subblock in the feature map is sampled N times. For a feature subblock in the feature map, data obtained after a union set of N feature subblocks 2 obtained through N times of sampling is calculated is the same as that of the feature subblock. As shown in FIG. 12, when S=2, and when the sparse mask matrix Ms whose window size is 8 performs sampling, four feature blocks including the feature subblock 11 are sampled, that is, the feature subblock 11 is sampled four times based on the sparse mask matrix Ms. A feature subblock obtained after the union set of the feature subblocks 2 obtained through four times of sampling is calculated is the same as the feature subblock 11, that is, data of the feature subblock obtained after the union set is calculated is the same as data of the feature subblock 11.

S503: The self-attention layer 2225 performs self-attention processing on the feature subblock 2 output by the sparse mask layer 2223, to obtain a feature subblock 3 whose window size is P. The self-attention layer 2225 may separately perform calculation with the feature subblock 2 based on a preset query weight matrix W_{Q}, a key weight matrix W_{K}, and a value weight matrix W_{V}, to obtain a query matrix Q, a key matrix K, and a value matrix V, and multiply a dot product of the query matrix Q and the key matrix K by the value matrix V, to obtain the feature subblock 3 for output.

S504: The dense mask layer 2224 samples, based on the dense mask matrix Md whose window size is M, each feature block in feature maps of the other part of channels, to obtain a plurality of feature subblocks 4 whose window sizes are P.

Specifically, the dense mask layer 2224 may use the dense mask matrix Md to sample each feature block in the feature map 1 of the channel C2 based on the step P, and obtain, from each feature block, a feature subblock whose window size is P. The sampling step may be the sampling step of the sparse mask layer 2223 shown in FIG. 10, until sampling is completed.

The reason why the window size of the feature subblock obtained through sampling by the dense mask matrix Md is P is that a quantity of valid values in the dense mask matrix Md is the same as a quantity of valid values in the feature subblock, both of which are P×P.

The feature subblock obtained by sampling the feature block based on the dense mask matrix Md is the same as one feature subblock in the feature block. The reason is that a location of a valid value in the dense mask matrix Md is the same as a location, in the feature block, of the feature subblock in the feature block. The dense mask matrix Md shown in FIG. 13 is used as an example, and valid values in the dense mask matrix Md are centrally disposed at the upper left corner. When the feature block 201 shown in FIG. 13 is sampled based on the dense mask matrix Md, all data of the feature subblock 11 in the feature block 201 may be sampled, that is, the feature subblock 11 is a feature subblock 4. The feature block 201 and the feature block 101 belong to different feature maps. Therefore, the feature subblock 11 in the feature block 201 and the feature subblock 11 in the feature block 101 belong to different feature maps. For ease of representation, a same mark is used in FIG. 13.

S505: The self-attention layer 2225 performs self-attention processing on the feature subblock 4 output by the dense mask layer 2224, to obtain a feature subblock 5 whose window size is P. The self-attention layer 2225 may separately perform calculation with the feature subblock 4 based on the preset query weight matrix W_{Q}, the key weight matrix W_{K}, and the value weight matrix W_{V}, to obtain a query matrix Q, a key matrix K, and a value matrix V, and multiply a dot product of the query matrix Q and the key matrix K by the value matrix V, to obtain the feature subblock 5 for output.

S506: The connection layer 2226 performs fusion and concatenation on feature subblocks 3 of a part of channels and feature subblocks 5 of the other part of channels that are output by the self-attention layer 2225, and the convolutional layer 2227 performs convolution calculation on an output of the connection layer 2226, to obtain feature maps 2 of a plurality of channels, and outputs the feature maps 2 of the plurality of channels.

FIG. 14 is a flowchart of a data processing method according to an embodiment of this application. The method may be applied to a compute device, and the mask self-attention module 222 in the super-resolution model shown in FIG. 1 is deployed in the compute device. The mask self-attention module 222 may use a structure in which the dense mask layer 2224 is removed in FIG. 3, that is, the sparse mask layer 2223 samples feature maps of all channels. As shown in FIG. 14, the method may include S1401 to S1404.

S1401: Divide the feature maps 1 of the plurality of channels of the input LR image into the plurality of feature subblocks whose window sizes are P, where the extension layer 2222 extends the plurality of feature subblocks by S times, to obtain the plurality of feature blocks whose window sizes are M.

S1402: Obtain, from the feature blocks in the feature maps of the channels based on the sparse mask matrix Ms whose window size is M, the feature subblocks 2 whose window sizes are P. The sparse mask layer 2223 of the mask self-attention module 222 may sample each feature block in the feature map of each channel, to obtain the plurality of feature subblocks 2 whose window sizes are P.

S1403: Generate, based on the feature subblocks 2, an SR image corresponding to the LR image. Specifically, S1403 may include the following steps S14031 to S14033.

S14031: The self-attention layer 2225 performs self-attention processing on the feature subblock 2 output by the sparse mask layer 2223, to obtain a feature subblock 3 whose window size is P. The self-attention layer 2225 may separately perform calculation with the feature subblock 2 based on the preset query weight matrix W_{Q}, the key weight matrix W_{K}, and the value weight matrix W_{V}, to obtain a query matrix Q, a key matrix K, and a value matrix V, and multiply a dot product of the query matrix Q and the key matrix K by the value matrix V, to obtain the feature subblock 3 for output.

S14032: The connection layer 2226 performs fusion and concatenation on feature subblocks 3 of the channels that are output by the self-attention layer 2225, and the convolutional layer 2227 performs convolution calculation on an output of the connection layer 2226, to obtain feature maps 2 of a plurality of channels, and outputs the feature maps 2 of the plurality of channels.

S14033: The reconstruction unit 230 generates, based on the feature maps 2 of the plurality of channels, the SR image corresponding to the LR image.

For a specific process of each step in the foregoing embodiment, refer to the description in embodiments shown in FIG. 1 and FIG. 5. Details are not described herein again.

According to the method embodiments shown in FIG. 5 and FIG. 14, an embodiment of this application further provides a method for determining a sparse mask matrix.

FIG. 15a is a flowchart of a method for determining a sparse mask matrix according to an embodiment of this application. The method may be applied to the foregoing compute device, and is used to determine, according to a non-volatile principle, the sparse mask matrix Ms used in FIG. 5 and FIG. 14. As shown in FIG. 15a, the method may include S1501 to S1503.

S1501: The compute device randomly generates a sparse mask matrix Ms0 whose window size is M, where a quantity of valid values in the sparse mask matrix Ms0 is 16, and a quantity of invalid values in the sparse mask matrix Ms0 is 48.

S1502: The compute device determines N target feature blocks whose window sizes are all P in the target feature map, where each of the N target feature blocks includes a first target feature subblock in the target feature map.

The N target feature blocks may include N feature blocks in the feature map of any one of the foregoing channels. A feature map shown in FIG. 12 is used as an example. If the feature subblock 11 is used as the first target feature subblock, the N target feature blocks may be feature blocks at the upper left corner (including the feature subblock 11, the feature subblock 12, the feature subblock 21, and the feature subblock 22), feature blocks at the upper right corner (including the feature subblock 18, the feature subblock 11, the feature subblock 28, and the feature subblock 21), feature blocks at the lower left corner (including the feature subblock 81, the feature subblock 82, the feature subblock 11, and the feature subblock 12), and feature blocks at the lower right corner (including a feature subblock 88, the feature subblock 81, the feature subblock 18, and the feature subblock 11) shown in FIG. 12.

S1503: The compute device samples the N target feature blocks based on the sparse mask matrix Ms0, to obtain N second target feature subblocks whose window sizes are all P.

S1504: The compute device calculates a union set of the N second target feature subblocks, to obtain a third target feature subblock whose window size is P.

S1505: The compute device determines, based on the first target feature subblock and the third target feature subblock, whether the sparse mask matrix Ms0 meets the foregoing non-volatile principle; and if yes, uses the sparse mask matrix Ms0 as the sparse mask matrix Ms; otherwise, performs S1501 again.

The compute device may calculate a sampling loss rate *β* between the first target sub feature and the third target subfeature according to the following formula (1). If the sampling loss rate *β* is 0, data at same locations of the first target subfeature *F*₁ and the third target sub feature *F*₃ is the same, and the sparse mask matrix Ms0 meets the non-volatile principle. For example, three sparse mask matrices Ms0 (including Ms0-1, Ms0-2, and Ms0-3) shown in FIG. 15b are separately used to sample the feature block 101 shown in FIG. 11. If sampling loss rates *β* of three times of sampling are 0, 25%, and 75% shown in FIG. 15b, the sparse mask matrix Ms0-1 whose sampling loss rates *β* are 0 meets the non-volatile principle.$β = 1 - \frac{\left‖{F}_{1}∩{F}_{3}\right‖}{\left‖{F}_{1}\right‖}$ (1)

In the formula (1), ∥*F*₁ ∩ *F*₃∥ represents a two-norm obtained through calculation based on data obtained after an intersection set is obtained between the first target subfeature *F*₁ and the third target subfeature *F*₃, and ∥*F*₁∥ represents a two-norm obtained through calculation based on data of ∥*F*₁∥.

The compute device may repeatedly perform S1501 to S1505, to obtain a plurality of sparse mask matrices Ms0 that meet the non-volatile principle as candidate sparse mask matrices Ms. Then, each candidate sparse mask matrix Ms is applied to the method shown in FIG. 1 or FIG. 14, and super-resolution is performed on the LR image data based on the super-resolution model according to the method shown in FIG. 1 or FIG. 14, to determine a latency of super-resolution calculation performed by the super-resolution model based on each candidate sparse mask matrix Ms. Finally, a candidate sparse mask matrix Ms that is less than or equal to a latency threshold is selected as a final result based on the latency corresponding to each candidate sparse mask matrix Ms.

Based on the super-resolution model shown in FIG. 1, an embodiment of this application further provides a method for training a super-resolution model.

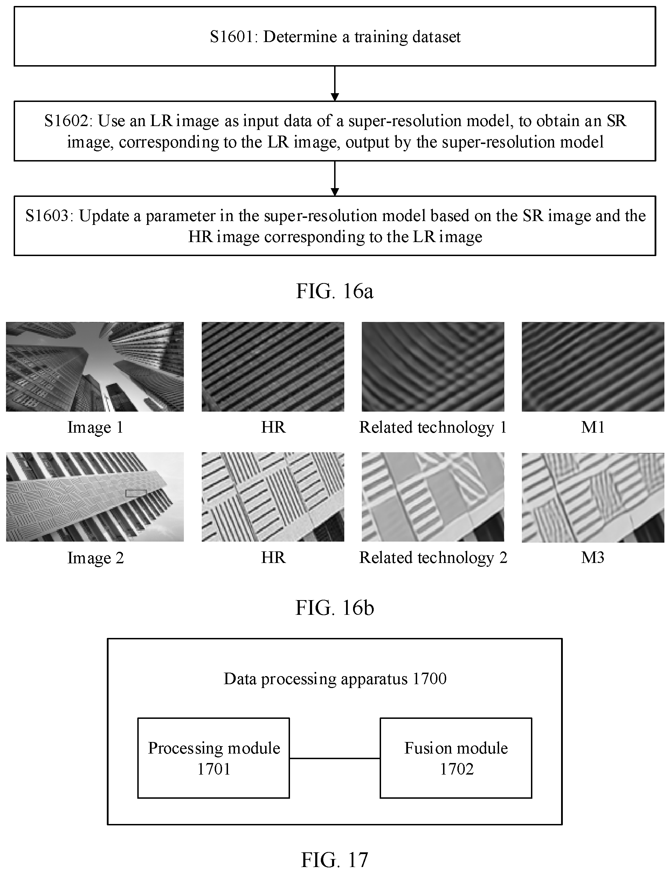

FIG. 16a is a flowchart of a method for training a super-resolution model according to an embodiment of this application. As shown in FIG. 16a, the method may include the following steps.

S1601: A compute device determines a training dataset, where the training dataset may include one or more LR images and an HR image corresponding to the LR image.

S1602: The compute device uses each LR image as input data of the super-resolution model shown in FIG. 1, to obtain an SR image, corresponding to each LR image, output by the super-resolution model. For a process of processing the input LR image based on the super-resolution model, refer to the foregoing descriptions of FIG. 1 to FIG. 5. Details are not described herein again.

S1603: The compute device calculates, based on the SR image corresponding to each LR image and the HR image corresponding to each LR image, a super-resolution loss value corresponding to each LR image based on a predetermined loss function, and updates a parameter in the super-resolution model based on the super-resolution loss value corresponding to each LR image, until the super-resolution loss value corresponding to each LR image meets a loss threshold.

Super-resolution models (marked as: M1, M2, and M3, where parameter quantities increase sequentially), of three specifications, obtained through training according to the method shown in FIG. 16a are tested on same datasets (a dataset 1 and a dataset 2) as super-resolution models obtained through training based on a related technology 1 and a related technology 2, and obtained performance comparisons are shown in Table 1. Performance shown in Table 1 includes a latency (latency, in milliseconds ms), params (Params, in millions M), floating-point operations per second (floating-point operations per second, FLOPs, in Giga), and a peak signal-to-noise ratio (peak signal-to-noise ratio, PSNR) and a structural similarity index measure SSIM (structural similarity index measure, SSIM), where the PSNR and the SSIM are in decibels (decibel, dB).

**Table 1 Performance comparison of super-resolution models**

| Super-resolution scale | Model | Latency (ms) | Params (M) | FLOPs (G) | Dataset 1 | Dataset 2 |
|---|---|---|---|---|---|---|
| ×2 | Related technology 1 | 39 | 1.97 | 316 | 37.99/0.9604 | 33.57/0..9175 |
| | Related technology 2 | 177 | 0.62 | 168 | 38.17/0.9611 | 33.94/0.9207 |
| | M1 | 29 | 0.36 | 69 | 38.03/0.9608 | 33.61/0.9184 |
| | M2 | 99 | 2.33 | 455 | 38.20/0.9615 | 33.96/0.9217 |
| | M3 | 892 | 26.05 | 5211 | 38.38/0.9621 | 34.33/0.9239 |
| ×4 | Related technology 1 | 39 | 1.52 | 114 | 30.09/0.8938 | 28.58/0.7813 |
| | Related technology 2 | 45 | 0.60 | 43 | 32.43/0.8975 | 28.78/0.7858 |
| | M1 | 8 | 0.36 | 18 | 32.19/0.8961 | 28.60/0.7860 |
| | M2 | 31 | 2.81 | 141 | 32.51/0.8990 | 28.81/0.7870 |
| | M3 | 223 | 26.09 | 1.361 | 32.82/0.9025 | 28.99/0.7921 |

It can be learned from Table 1 that values of d (two pieces of data in boxes in the dataset 1 and the dataset 2) of the three models obtained according to the method in this embodiment of this application at two super-resolution scales (two times of super-resolution and four times of super-resolution) are all better than the related technology 1 and the related technology 2.

Two-times of super-resolution is performed on an image 1 in the dataset 2 by using the related technology 1 and M1 obtained in this embodiment of this application, and two-times of super-resolution is performed on an image 2 in the dataset 2 by using the related technology 2 and M3 obtained in this embodiment of this application. Obtained super-resolution (SR) images are shown in FIG. 16b. In comparison with an HR image corresponding to an original image, a super-resolution result in this embodiment of this application may include more textures.

In addition, the processing modules 221 in the three models provided in this embodiment of this application each include a high-frequency extraction branch (branch 3), and can extract high-frequency information from a feature map. When the model is used for image super-resolution, it is beneficial for image reconstruction of dense textures and edge details. The high-frequency extraction branch of the model M3 is ablated, to obtain a PSNR comparison result shown in Table 2 based on the dataset 1 and the data 2. It can be seen from Table 2 that in an implementation in which the branch 3 is included, PSNRs for processing the dataset 1 and the dataset 2 are increased by 0.05 dB and 0.04 dB, respectively.

**Table 2 PSNR comparison of whether a high-frequency extraction branch is added**

| Whether there is high-frequency extraction | Dataset 1 | Dataset 2 |
|---|---|---|
| Yes | 32.87 | 39.21 |
| No | 32,82 | 39.17 |

According to the foregoing data processing method embodiments, an embodiment of this application further provides a data processing apparatus.

FIG. 17 is a diagram of a structure of a data processing apparatus 1700 according to an embodiment of this application. The data processing apparatus 1700 may be configured to implement the data processing method shown in FIG. 4. As shown in FIG. 17, the data processing apparatus 1700 may include a processing module 1701 and a fusion module 1702.

The processing module 1701 is configured to perform the plurality of times of feature extraction processing on the feature maps 3 of the plurality of channels of the input LR image, to obtain the plurality of pieces of output data.

The fusion module 1702 is configured to fuse the plurality of pieces of output data to obtain the feature maps 1 of the plurality of channels of the LR image.

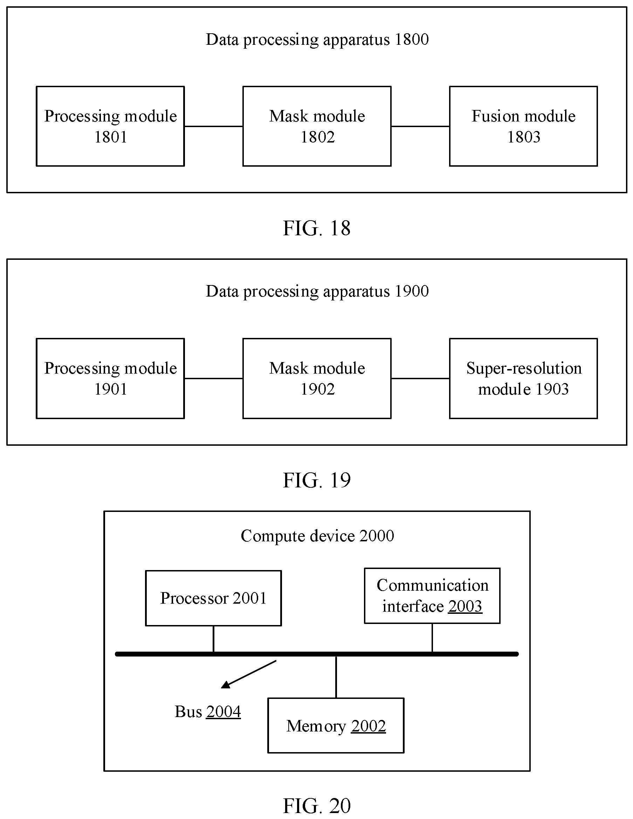

FIG. 18 is a diagram of a structure of a data processing apparatus 1800 according to an embodiment of this application. The data processing apparatus 1800 may be configured to implement the data processing method shown in FIG. 5. As shown in FIG. 18, the data processing apparatus 1800 may include a processing module 1801, a mask module 1802, and a fusion module 1803.

The processing module 1801 is configured to: divide the feature maps 1 of the plurality of channels of the input LR image into the plurality of feature subblocks whose window sizes are P, and extend the plurality of feature subblocks by S times, to obtain the plurality of feature blocks whose window sizes are M.

The mask module 1802 is configured to: sample, based on the sparse mask matrix Ms whose window size is M, each feature block in the feature maps of the part of channels (for example, C/2), to obtain the plurality of feature subblocks 2 whose window sizes are P; and sample, based on the dense mask matrix Md whose window size is M, each feature block in the feature maps of the other part of channels (for example, C/2), to obtain the plurality of feature subblocks 4 whose window sizes are P.

The fusion module 1803 is configured to: perform fusion and concatenation on the feature subblocks 3 of the part of channels and the feature subblocks 5 of the other part of channels, and perform convolution calculation on data obtained after the fusion and concatenation, to obtain the feature maps 2 of the plurality of channels.

FIG. 19 is a diagram of a structure of a data processing apparatus 1900 according to an embodiment of this application. The data processing apparatus 1900 may be configured to implement the data processing method shown in FIG. 14. As shown in FIG. 19, the data processing apparatus 1900 may include a processing module 1901, a mask module 1902, and a super-resolution module 1903.

The processing module 1901 is configured to: divide the feature maps 1 of the plurality of channels of the input LR image into the plurality of feature subblocks whose window sizes are P, and extend the plurality of feature subblocks by S times, to obtain the plurality of feature blocks whose window sizes are M.

The mask module 1902 is configured to sample, based on the sparse mask matrix Ms whose window size is M, each feature block in the feature maps of the channels, to obtain the plurality of feature subblocks 2 whose window sizes are P.

The super-resolution module 1903 is configured to generate, based on the feature subblocks 2, the HR image corresponding to the LR image.

It should be noted that when the data processing apparatus 1700 provided in the embodiment shown in FIG. 17, the data processing apparatus 1800 provided in the embodiment shown in FIG. 18, and the data processing apparatus 1800 provided in the embodiment shown in FIG. 19 perform the data processing method, division of the foregoing functional modules is merely used as an example for description. During actual application, the functions may be allocated to different functional modules for implementation as required. To be specific, an internal structure is divided into different functional modules to implement a part or all of the functions described above. In addition, the compute device provided in the foregoing embodiment and the data processing method embodiment shown in FIG. 4, FIG. 5, or FIG. 14 pertain to a same concept. For a specific implementation process of the compute device, refer to the method embodiment. Details are not described herein again.

FIG. 20 is a diagram of a hardware structure of a compute device 2000 according to an embodiment of this application.

The compute device 2000 may be deployed with the compute device in which the super-resolution model is deployed in the foregoing embodiment. Refer to FIG. 20. The compute device 2000 includes a processor 2001, a memory 2002, a communication interface 2003, and a bus 2004. The processor 2001, the memory 2002, and the communication interface 2003 are connected to each other through the bus 2004. The processor 2001, the memory 2002, and the communication interface 2003 may alternatively be connected in another connection manner other than the bus 2004.

The processor 2001 may be a general-purpose processor, and the general-purpose processor may be a processor that performs a specific step and/or operation by reading and executing content stored in a memory (for example, the memory 2002). For example, the general-purpose processor may be a central processing unit (central processing unit, CPU). The processor 2001 may include at least one circuit, to perform a part or all of the steps of the method provided in the embodiment shown in FIG. 4, FIG. 5, or FIG. 14. The processor 2001 may include one or more cores. When a plurality of cores are included, the plurality of cores may be separately configured to perform a part or all of the steps of the method provided in the embodiment shown in FIG. 4, FIG. 5, or FIG. 14.

The memory 2002 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk drive. When the compute device 2000 is deployed with the super-resolution model, the memory 2002 may store a program corresponding to the data processing apparatus 1700 and/or a program corresponding to the data processing apparatus 1800.

The communication interface 2003 includes an interface for implementing interconnection between components in the compute device 2000, for example, an input/output (input/output, I/O) interface, a physical interface, and a logical interface; and an interface for implementing interconnection between the compute device 2000 and another device (for example, another compute device or user equipment). The physical interface may be an Ethernet interface, an optical fiber interface, an ATM interface, or the like.

The bus 2004 may be any type of communication bus configured to implement interconnection between the processor 2001, the memory 2002, and the communication interface 2003, for example, a system bus.

The foregoing components may be separately disposed on chips that are independent of each other, or at least a part or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The compute device 2000 shown in FIG. 20 is merely an example. During implementation, the compute device 2000 may further include other components, which are not listed one by one in this specification.

A part or all of the foregoing embodiments may be implemented by using software, hardware, firmware, or any combination thereof. When software is used to implement embodiments, a part or all of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application. It should be understood that, in embodiments of this application, sequence numbers of the foregoing processes do not mean an execution sequence. The execution sequence of the processes should be determined based on functions and internal logic of the processes, and should not be construed as any limitation on implementation processes of embodiments of this application.

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A data processing method, wherein the method comprises:
obtaining a first feature block whose window size is M from a feature map of a first channel of a target image, wherein the first feature block comprises N feature subblocks whose window sizes are all P, and M is greater than P;
obtaining, from the first feature block based on a first mask matrix whose window size is M, a second feature subblock whose window size is P; and
determining, based on the second feature subblock, a super-resolution image corresponding to the target image, wherein resolution of the super-resolution image is greater than resolution of the target image.

2. The method according to claim 1, wherein the N feature subblocks comprise a first feature subblock, the first feature subblock is the same as a first target feature subblock, the first target feature subblock is obtained by calculating a union set of the second feature subblock and N-1 second target feature subblocks whose window sizes are P, the N-1 second target feature subblocks are obtained based on the first mask matrix and N-1 target feature blocks whose window sizes are M in the feature map of the first channel, and the N-1 target feature blocks each comprise the first feature subblock.

3. The method according to claim 1 or 2, wherein the determining, based on the second feature subblock, the super-resolution image corresponding to the target image comprises:
processing the second feature subblock based on a self-attention mechanism to obtain a third feature subblock whose window size is P, and processing, based on the self-attention mechanism, a fourth feature subblock, whose window size is P, obtained from a feature map of a second channel of the target image, to obtain a fifth feature subblock whose window size is P; and
generating the super-resolution image based on the third feature subblock and the fifth feature subblock.

4. The method according to claim 3, wherein the method further comprises:
obtaining, based on a second mask matrix whose window size is M, the fourth feature subblock from a second feature block whose window size is M in the feature map of the second channel, wherein the second feature block comprises the N feature subblocks whose window sizes are all P, and the N feature subblocks in the second feature block comprise the fourth feature subblock.

5. The method according to claim 4, wherein the method further comprises:
performing feature extraction on an initial feature map of the first channel based on a first operator, to obtain a first feature of the first channel, wherein a frequency of the first feature is greater than a frequency threshold, and
determining the feature map of the first channel based on the first feature of the first channel; and/or
performing feature extraction on an initial feature map of the second channel based on the second operator, to obtain a first feature of the second channel, and
determining the feature map of the second channel based on the first feature of the second channel.

6. The method according to any one of claims 1 to 5, wherein the first operator comprises a Sobel sobel operator or a Laplacian laplacian operator.

7. The method according to any one of claims 1 to 6, wherein the method is applied to a super-resolution model, and the method further comprises:
determining a latency of the super-resolution model; and
updating the first mask matrix when the latency is less than or equal to a latency threshold.

8. A data processing apparatus, wherein the apparatus comprises:
a processing module, configured to obtain a first feature block whose window size is M from a feature map of a first channel of a target image, wherein the first feature block comprises N feature subblocks whose window sizes are all P, and M is greater than P;
a mask module, configured to obtain, from the first feature block based on a first mask matrix whose window size is M, a second feature subblock whose window size is P; and
a super-resolution module, configured to determine, based on the second feature subblock, a super-resolution image corresponding to the target image, wherein resolution of the super-resolution image is greater than resolution of the target image.

9. A compute device, wherein the compute device comprises a processor and a memory, and the processor is configured to execute a computer program stored in the memory to perform the method according to any one of claims 1 to 7.

10. A computer-readable storage medium, comprising instructions, wherein when the instructions are run on a computer, the computer performs the method according to any one of claims 1 to 7.

11. A computer program product comprising instructions, wherein when the instructions are run on a computer, the computer performs the method according to any one of claims 1 to 7.
